**Europäisches Patentamt**

**European Patent Office**

**Office européen des brevets**

(19)

(11) Veröffentlichungsnummer : **0 330 021 B1**

(12) **EUROPÄISCHE PATENTSCHRIFT**

(45) Veröffentlichungstag der Patentschrift :
16.10.91 Patentblatt 91/42

(51) Int. Cl.$^5$ : **C02F 1/52, C01F 11/46**

(21) Anmeldenummer : **89102285.7**

(22) Anmeldetag : **10.02.89**

(54) Verfahren und Anlage zur Reinigung von Abwasser.

(30) Priorität : 26.02.88 DE 3806137

(43) Veröffentlichungstag der Anmeldung :
30.08.89 Patentblatt 89/35

(45) Bekanntmachung des Hinweises auf die
Patenterteilung :
16.10.91 Patentblatt 91/42

(84) Benannte Vertragsstaaten :
AT BE CH DE ES FR GB GR IT LI LU NL SE

(56) Entgegenhaltungen :
BE-A- 18 945
FR-A- 1 097 683
GB-A- 2 082 158

(73) Patentinhaber : HOECHST
AKTIENGESELLSCHAFT
Postfach 80 03 20
W-6230 Frankfurt am Main 80 (DE)

(72) Erfinder : Roszinski, Hilmar, Dr.
Julius-Leber-Strasse 7
W-5042 Erftstadt (DE)
Erfinder : Grimm, Dieter, Dr.
Max-Ernst-Strasse 3
W-5042 Erftstadt (DE)
Erfinder : Biermann, Walter
Antoniter-Strasse 20
W-5014 Kerpen (DE)

## Beschreibung

Die vorliegende Erfindung betrifft ein Verfahren zur Reinigung von sulfathaltigem Abwasser sowie eine Anlage zu seiner Durchführung.

Aus der FR-A-1097683 ist ein Verfahren zur Herstellung von synthetischem Gips bekannt, bei welchem eine Magnesiumsulfat enthaltende Sole mit Calciumchlorid im Molverhältnis $Ca^{++}$ zu $SO_4^{--}$ von 1:1 vermischt wird. Die Mischung wird 15 bis 20 Minuten lang langsam gerührt, wobei ein gut dekantierbares Calciumsulfatdihydrat ausfällt. Die wäßrige Suspension des Calciumsulfatdihydrates wird zunächst in einem Eindicker konzentriert, bevor der am Boden des Eindickers abgezogene Dickschlamm auf einem Vakuumdrehfilter filtriert und gewaschen wird.

Weiterhin ist bekannt, daß zur Fällung von Sulfat aus Abwasser ein erheblicher stöchiometrischer Überschuß an Calciumchlorid erforderlich ist, wenn die Dosierung der Calciumchlorid-Lösung nach der Neutralisation mit Kalkmilch in dem Kristallisationsbecken erfolgt. Wegen des erforderlichen großen Fällmitteleinsatzes ist daher dieser Weg zur Eliminierung von Sulfat aus Abwasser einerseits aus wirtschaftlichen Erwägungen und andererseits wegen der damit verbundenen starken Erhöhung der Salzfracht im Ablauf aus Umweltschutzgründen nicht gangbar (vergl. "Forschungsbericht Nr. 2/84 der Forschungsgemeinschaft der Deutschen Kalkindustrie e.V.", Seite 21).

In zunehmendem Maß wird bei chemischen Umsetzungen, beispielsweise bei der Entschwefelung von Rauchgasen der mit fossilen Brennstoffen betriebenen Kraftwerke, anfallender Gips auf Deponien abgelagert. Wegen der relativ guten Löslichkeit von Gips in Wasser (etwa 2 g/l bei 20°C) ist es nicht zulässig, Sickerwässer von Gipsdeponien unbehandelt in den Vorfluter zu geben.

Es ist daher Aufgabe der vorliegenden Erfindung, ein Verfahren zur Reinigung von sulfathaltigem Abwasser anzugeben, bei welchem der Sulfatgehalt des Abwassers spürbar gesenkt wird, ohne seine Salzfracht wesentlich zu erhöhen. Das wird erfindungsgemäß erreicht durch

a) Versetzen des einen pH-Wert zwischen 2 und 4 aufweisenden Abwassers in einer Mischzone mit Calciumchlorid-Lösung ;

b) Einstellen eines Molverhältnisses von $Ca^{++}$ zu $SO_4^{--}$ von (1,50 bis 3) : 1 in der Mischzone ;

c) Einleiten des Ablaufs aus der Mischzone in eine durchrührte Verweilzone ;

d) Überführen des Überlaufs aus der Verweilzone in eine Eindickzone ;

e) Zuführen des aus der Eindickzone abgezogenen Dickschlammes in eine Filtrationszone ;

f) Einleiten des Überlaufs aus der Eindickzone nach Zusatz weiterer Abwässer und nach Behandlung mit einer wäßrigen Kalksuspension in eine biologische Reinigungsstufe.

Das Verfahren gemäß der Erfindung kann weiterhin wahlweise auch noch dadurch ausgestaltet sein, daß

aa) als Calciumchlorid-Lösung calciumchloridhaltige Produktionsabwässer verwendet werden;

bb) die Verweildauer in der Verweilzone D,5 bis 4 Stunden beträgt ;

cc) in den Zulauf zur Eindickzone Flockungshilfsmittel eingebracht werden ;

dd) als Flockungshilfsmittel kationaktive Polymere dienen, von welchen 1 bis 10 ppm, bezogen auf das Abwasser, angewendet werden ;

ee) als Flockungshilfsmittel ionogene Verbindungen des Eisens und/oder Aluminiums dienen, von welchen 0,01 bis 0,5 Gewichts%, bezogen auf das Abwasser, angewendet werden.

Eine Anlage zur Durchführung des erfindungsgemäßen Verfahrens, welche aus einer Neutralisationseinrichtung besteht, die aus einem Neutralisationsbehälter, einem Kristallisator und einem Sedimentationsgefäß aufgebaut ist, kann dadurch gekennzeichnet sein, daß ein Abwasserzuführungsrohr mit einer Mischstrecke verbunden ist ; daß in die Mischstrecke eine Zuführungsleitung für eine ionogenes Calcium enthaltende Lösung tangential einmündet ; daß die Mischstrecke mit dem unteren Bereich mindestens eines mit einem Rührer versehenen Verweilbehälters strömungsmäßig verbunden ist ; daß der Verweilbehälter strömungsmäßig mit einem Eindicker in Verbindung steht ; daß eine vom Bodenablaß des Eindickers zu einer Filtrationseinrichtung führende Schlammabführungsleitung vorgesehen ist ; daß vom oberen Bereich des Eindickers eine zum Neutralisationsbehälter der Neutralisationseinrichtung führende Leitung abgeht ; und daß die Neutralisationseinrichtung strömungsmäßig mit einer biologischen Ab-wasser-Reinigungsanlage verbunden ist.

Die genannte Anlage kann wahlweise auch noch dadurch weitergebildet sein, daß

ff) strömungsmäßig zwischen der Mischstrecke und dem Eindicker mindestens zwei Verweilbehälter angeordnet sind ;

gg) jeder Verweilbehälter mit einem Entlüftungsrohr versehen ist.

Beim Verfahren gemäß der Erfindung können kationaktive Polymere auf der Basis von Ethylenamin, Ethylenimin oder quarternierter organischer Ammoniumverbindungen, beispielsweise Polyaminocarbonsäureester, mit Polymerisationsgraden von mehr als 40000 verwendet werden.

Beim erfindungsgemäßen Verfahren können als Flockungshilfsmittel einfache oder komplexe Chloride oder Sulfate des Eisens oder Aluminiums verwendet werden.

Bei Verfahren gemäß der Erfindung kann der in der Filtratszone anfallende Gips entweder direkt oder nach Verpressen mit ausgeschleustem Klärschlamm zur Deponie verbracht werden.

Beim erfindungsgemäßen Verfahren weist das Abwasser in der Mischzone eine Temperatur von weniger als 60°C auf.

In der beigefügten Zeichnung ist eine Anlage zur Durchführung des erfindungsgemäßen Verfahrens schematisch und teilweise im Schnitt dargestellt.

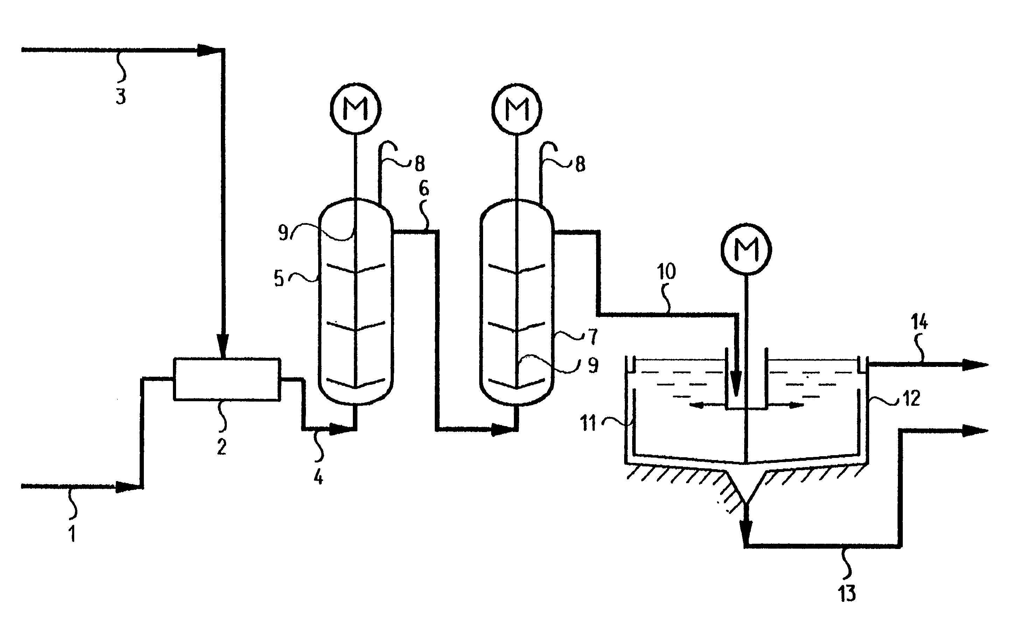

Ein Abwasserzuführungsrohr 1 ist mit einer Mischstrecke 2 verbunden, in welche tangential eine Zuführungsleitung 3 für eine ionogenes Calcium enthaltende Flüssigkeit einmündet. An der der Eintrittsstelle des Abwasserzuführungsrohres 1 entgegengesetzten Seite der Mischstrecke 2 geht ein erstes Rohr 4 ab, welches mit dem unteren Bereich eines ersten Verweilbehälters 5 strömungsmäßig verbunden ist, während vom oberen Bereich des ersten Verweilbehälters 5 ein zweites Rohr 6 abgeht, welches mit dem unteren Bereich eines zweiten Verweilbehälters 7 strömungsmäßig verbunden ist, wobei beide Verweilbehälter (5, 7) mit je einem Entlüftungsrohr 8 und mit je einem von einem Motor M antreibbaren Rührer 9 versehen sind. Vom oberen Bereich des zweiten Verweilbehälters 7 geht ein drittes Rohr 10 ab, welches oberhalb eines mit einem durch einen Motor M antreibbaren Krählwerk 11 versehenen Eindickers 12 endet. Der Bodenablaß des Eindickers 12 ist über eine Schlammabführungsleitung 13 mit einer nicht dargestellten Filtrationseinrichtung verbunden, während vom oberen Bereich des Eindickers 12 eine Leitung 14 zu einer aus Neutralisationsbehälter, mit Rührer versehenem Kristallisator sowie Sedimentationsgefäß bestehenden Neutralisationseinrichtung (vergl. Forschungsbericht Nr. 2/84 der Forschungsgemeinschaft der Deutschen Kalkindustrie, Seite 13, Abbildung 2) abgeht, wobei die Neutralisationseinrichtung ihrerseits mit einer biologischen Abwasser-Reinigungsanlage strömungsmäßig verbunden sein kann.

Die folgenden Beispiele dienen der Erläuterung des erfindungsgemäßen Verfahrens.

Beispiel 1

Durch das Abwasserzuführungsrohr 1 (vergl. die Figur) liefen 77 m³/h sulfathaltiges Wasser (mit 9700 mg/l $\triangleq$747 kg/h $SO_4^{--}$) und durch die Zuführungsleitung 3 31 m³/h ionogenes Calcium enthaltende Flüssigkeit (mit 8190 mg/l $\triangleq$254 kg/h $Ca^{++}$) in die Mischstrecke 2 ein. Mithin liefen in den Verweilbehälter 5 108 m³/h einer Mischung ein, welche ein Molverhältnis $SO_4^{--}$ : $Ca^{++}$ von 1 : 0,85 ($SO_4^{--}$ : 6920 mg/l ; $Ca^{++}$ : 2460 mg/l) aufweis. Aus dem Verweilbehälter 7 lief eine Suspension in den Eindicker 12 ab, welche 314 kg/h festes Sulfat und 433 kg/h gelöstes Sulfat ($SO_4^{--}$ : 3990 mg/l ; $Ca^{++}$ : 1510 mg/l) enthielt. Am Boden des Eindickers 12 wurden über seine Schlammabführungsleitung 13 257 kg/h Sulfat abgezogen, was 461 kg/h Calciumsulfatdihydrat (Gips) entspricht. Aus dem Eindicker 12 liefen über die Leitung 14 108 m³/h Wasser mit einem Sulfatgehalt von 490 kg/h in ein Vorklärbecken über, in welches gleichzeitig 530 m³/h eines weniger Sulfat enthaltenden Abwassers (mit 1720 mg/l $\triangleq$912 kg/h $SO_4^{--}$) eingeleitet wurden; die in das Vorklärbecken insgesamt eingeleiteten 638 m³/h Wasser wiesen einen Sulfatgehalt von 2140 mg/l ( $\triangleq$1365 kg/h) auf.

In das Vorklärbecken wurde zur Neutralisation des Abwassers Kalkmilch (150 kg/h $Ca^{++}$) eingetragen. Aus dem Vorklärbecken wurden 323 kg/h festes Sulfat ausgetragen, während 38 m³/h Vorklärschlamm abgezogen wurde, welcher 62 kg/h gelöstes Sulfat enthielt.

Aus dem Vorklärbecken wurden 600 m³/h Abwasser (mit 1630 mg/l $\triangleq$978 kg/h $SO_4^{--}$) einer biologischen Abwasser-Reinigungsanlage zugeführt.

Insgesamt wurden 580 kg/h Sulfat in fester Form abgetrennt, d.h. 36% des im gesamten eingesetzten Abwasser enthaltenen Sulfates.

Die Sulfat-Elimination, welche mit Hilfe des Eindickers 12 erreicht wurde, betrug 34%.

Beispiel 2

Beispiel 1 wurde mit der Änderung wiederholt, daß in den Eindicker 12 0,1 kg/h Praestol 611 BC (Chemische Fabrik Stockhausen & Cie, Krefeld), ein kationaktives Polymer, in Form einer 0,1%igen wäßrigen Lösung als Flockungshilfsmittel eingebracht wurden. Dadurch konnten am Boden des Eindickers 12 über seine Schlammführungsleitung 13 301 kg/h Sulfat ( $\triangleq$539 kg/h Calciumsulfatdihydrat) abgezogen werden, während über seine Leitung 14 108 m³/h Wasser mit einem Sulfatgehalt von 440 kg/h in das Vorklärbecken überliefen.

Die Sulfat-Elimination, welche mit Hilfe des Eindickers 12 erreicht wurde, betrug 40%.

Beispiel 3

Durch das Abwasserzuführungsrohr 1 (vergl. die Figur) liefen 77 m³/h sulfathaltiges Wasser (mit 9700 mg/l $\triangleq$747 kg/h $SO_4^{--}$) und durch die Zuführungsleitung 3 31 m³/h ionogenes Calcium enthaltende Flüssigkeit (mit 15100 mg/l $\triangleq$468 kg/h $Ca^{++}$) in die Mischstrecke 2 ein. Mithin liefen in den Verweilbehälter 5 108 m³/h einer Mischung ein, welche ein Molverhältnis $SO_4^{--}$ : $Ca^{++}$ von 1 : 1,50 ($SO_4^{--}$ : 6920 mg/l ; $Ca^{++}$ : 4330 mg/l) aufweis. Aus dem Verweilbehälter 7 lief eine Suspension in den Eindicker 12 ab, welche 523 kg/h festes Sulfat und 224 kg/h gelöstes Sulfat ($SO_4^{--}$ : 2080 mg/l ; $Ca^{++}$ : 2010 mg/l) enthielt. Am Boden des Eindickers 12 wurden über seine Schlammabführungsleitung 13 447 kg/h Sulfat abgezogen, was 801 kg/h Calciumsulfatdihydrat entspricht. Aus dem Eindicker 12 liefen über die Leitung 14 108 m³/h Wasser mit einem Sulfatgehalt von 300 kg/h in ein Vorklärbecken über, in welches gleichzeitig 530 m³/h eines weniger Sulfat enthaltenden Abwassers (mit 1720 mg/l ≙912 kg/h SO₄⁻⁻) eingeleitet wurden ; die in das Vorklärbecken insgesamt eingeleiteten 638 m³/h Wasser wiesen einen Sulfatgehalt von 1810 mg/l ≙1160 kg/h) auf. In das Vorklärbecken wurde zur Neutralisation des Abwassers Kalkmilch (150 kg/h Ca⁺⁺) eingetragen. Aus dem Vorklärbecken wurden 330 kg/h festen Sulfat ausgetragen, während 38 m³/h Vorklärschlamm abgezogen wurde, welcher 60 kg/h gelöstes Sulfat enthielt.

Aus dem Vorklärbecken wurden 600 m³/h Abwasser (mit 1340 mg/l ≙805 kg/h SO₄⁻⁻) einer biologischen Abwasser-Reinigungsanlage zugeführt.

Ingesamt wurden 777 kg/h Sulfat in fester Form abgetrennt, d.h. 46% des im gesamten eingesetzten Abwasser enthaltenen Sulfates.

Die Sulfat-Elimination, welche mit Hilfe des Eindickers 12 erreicht wurde, betrug 60%.

**Patentansprüche**

1. Verfahren zur Reinigung von sulfathaltigem Abwasser durch

a) Versetzen des einen pH-Wert zwischen 2 und 4 aufweisenden Abwassers in einer Mischzone, mit Calciumchlorid-Lösung ;

b) Einstellen eines Molverhältnisses von Ca⁺⁺ zu SO₄⁻⁻ von (1,50 bis 3) : 1 in der Mischzone ;

c) Einleiten des Ablaufs aus der Mischzone in eine durchrührte Verweilzone ;

d) Überführen des Überlaufs aus der Verweilzone in eine Eindickzone ;

e) Zuführen des aus der Eindickzone abgezogenen Dickschlammes in eine Filtrationszone ;

f) Einleiten des Überlaufs aus der Eindickzone nach Zusatz weiterer Abwässer und nach Behandlung mit einer wäßrigen Kalksuspension in eine biologische Reinigungsstufe.

2. Verfahren nach Anspruch 1, dadurch gekennzeichnet, daß als Calciumchlorid-Lösung calciumchloridhaltige Produktionsabwässer verwendet werden.

3. Verfahren nach Anspruch 1 oder 2, dadurch gekennzeichnet, daß die Verweildauer in der Verweilzone 0,5 bis 4 Stunden beträgt.

4. Verfahren nach mindestens einem der Ansprüche 1 bis 3, dadurch gekennzeichnet, daß in den Zulauf zur Eindickzone Flockungshilfsmittel eingebracht werden.

5. Verfahren nach Anspruch 4, dadurch gekennzeichnet, daß als Flockungshilfsmittel kationaktive Polymere dienen, von welchen 1 bis 10 ppm, bezogen auf das Abwasser, angewendet werden.

6. Verfahren nach Anspruch 4, dadurch gekennzeichnet, daß als Flockungshilfsmittel ionogene Verbindungen des Eisens und/oder Aluminiums dienen, von welchen 0,01 bis 0,5 Gewichts-%, bezogen auf das Abwasser, angewendet werden.

7. Anlage zur Durchführung des Verfahrens nach mindestens einem der Ansprüche 1 bis 6, bestehend aus einer Neutralisationseinrichtung, welche aus einem Neutralisationsbehälter, einem Kristallisator und einem Sedimentationsgefäß aufgebaut ist, dadurch gekennzeichnet, daß ein Abwasserzuführungsrohr (1) mit einer Mischstrecke (2) verbunden ist ; daß in die Mischstrecke (2) eine Zuführungsleitung (3) für eine ionogenes Calcium enthaltende Lösung tangential einmündet ; daß die Mischstrecke (2) mit dem unteren Bereich mindestens eines mit einem Rührer (9) versehenen Verweilbehälters (5) strömungsmäßig verbunden ist ; daß der Verweilbehälter (5) strömungsmäßig mit einem Eindicker (12) in Verbindung steht ; daß eine vom Bodenablaß des Eindickers (12) zu einer Filtrationseinrichtung führende Schlammabführungsleitung (13) vorgesehen ist ; daß vom oberen Bereich des Eindickers (12) eine zum Neutralisationsbehälter der Neutralisationseinrichtung führende Leitung (14) abgeht ; und daß die Neutralisationseinrichtung strömungsmäßig mit einer biologischen Abwasser-Reinigungsanlage verbunden ist.

8. Anlage nach Anspruch 7, dadurch gekennzeichnet, daß strömungsmäßig zwischen der Mischstrecke (2) und dem Eindicker (12) mindestens zwei Verweilbehälter (5, 7) angeordnet sind.

9. Anlage nach Anspruch 7 oder 8, dadurch gekennzeichnet, daß jeder Verweilbehälter (5, 7) mit einem Entlüftungsrohr (8) versehen ist.

**Claims**

1. A process for treating sulfate-containing effluent by

a) adding a calcium chloride solution in a mixing zone to the effluent having a pH of between 2 and 4,

b) adjusting the Ca⁺⁺/SO₄⁻⁻ molar ratio to (1.50 to 3) : 1 in the mixing zone,

c) introducing the outflow from the mixing zone into a stirred delay zone,

d) transferring the overflow from the delay zone into a thickening zone,

e) feeding the thick sludge taken off from the thickening zone into a filtration zone, and

f) introducing the overflow from the thickening zone, after addition of further effluents and after treatment with an aqueous lime suspension, into a biological treatment stage.

2. The process as claimed in claim 1, wherein calcium chloride-containing production effluents are used as the calcium chloride solution.

3. The process as claimed in claim 1 or 2, wherein the residence time in the delay zone is 0.5 to 4 hours.

4. The process as claimed in at least one of claims 1 to 3, wherein flocculation aids are introduced into the feed to the thickening zone.

5. The process as claimed in claim 4, wherein the flocculation aids used are cationic polymers, of which 1 to 10 ppm, relative to the effluent, are applied.

6. The process as claimed in claim 4, wherein the flocculation aids used are ionic compounds of iron and/or aluminum, of which 0.01 to 0.5% by weight, relative to the effluent, are applied.

7. Equipment for carrying out the process as claimed in at least one of claims 1 to 6, composed of a neutralization device which is built up from a neutralization tank, a crystallizer and a sedimentation vessel, wherein an effluent feed pipe (1) is connected to a mixing section (2), a feed line (3) for a solution containing ionic calcium leads tangentially into the mixing section (2), the mixing section (2) is flow-connected to the lower region of at least one delay vessel (5) provided with a stirrer (9), the delay vessel (5) is flow-connected to a thickener (12), a sludge discharge line (13) leading from the bottom outlet of the thickener (12) to a filtration device is provided, a line (14) leading to the neutralization tank of the neutralization device starts from the upper region of the thickener (12), and the neutralization device is flow-connected to a biological effluent treatment unit.

8. The equipment as claimed in claim 7, wherein at least two delay vessels (5, 7) are arranged in the flow between the mixing section (2) and the thickener (12).

9. The equipment as claimed in claim 7 or 8, wherein each delay vessel (5, 7) is provided with a vent pipe (8).

## Revendications

1. Procédé pour épurer des eaux résiduaires contenant du sulfate par

    a) addition d'une solution de chlorure de calcium aux eaux résiduaires à un pH de 2 à 4 dans une zone de mélange ;

    b) réglage d'un rapport molaire $Ca^{++}/SO_4^{--}$ de 1,50 à 3 : 1 dans la zone de mélange ;

    c) envoi de l'effluent de la zone de mélange dans une zone de passage soumise à agitation ;

    d) envoi du courant de débordement de la zone de passage dans une zone de concentration ;

    e) envoi des boues épaisses évacuées de la zone de concentration vers une zone de filtration ;

    f) envoi du courant de débordement de la zone de concentration, après addition de compléments d'eaux résiduaires et après traitement par une suspension aqueuse de chaux, à une opération d'épuration biologique.

2. Procédé selon la revendication 1, caractérisé en ce que l'on utilise en tant que solution de chlorure de calcium des eaux résiduaires de productions contenant du chlorure de calcium.

3. Procédé selon la revendication 1 ou 2, caractérisé en ce que la durée de passage dans la zone de passage est de 0,5 à 4 h.

4. Procédé selon une au moins des revendications 1 à 3, caractérisé en ce que, dans le courant envoyé vers la zone de concentration, on introduit des produits auxiliaires de floculation.

5. Procédé selon la revendication 4, caractérisé en ce que les produits auxiliaires de floculation sont des polymères cationiques utilisés en quantités de 1 à 10 ppm par rapport aux eaux résiduaires.

6. Procédé selon la revendication 4, caractérisé en ce que l'on utilise en tant que produits auxiliaires de floculation des composés ionogènes du fer et/ou de l'aluminium, en quantités de 0,01 à 0,5% du poids des eaux résiduaires.

7. Appareillage pour la mise en oeuvre du procédé selon une au moins des revendications 1 à 6, consistant en une installation de neutralisation constituée d'un récipient de neutralisation, d'un cristalliseur et d'un récipient de sédimentation, caractérisé en ce qu'un conduit d'amenée des eaux résiduaires 1 est relié à un parcours de mélange 2 ; dans le parcours de mélange 2, un conduit d'amenée 3 pour une solution contenant du calcium ionogène débouche tangentiellement ; le parcours de mélange 2 est relié, dans le sens de l'écoulement, à la région inférieure d'au moins un récipient de passage 5 équipé d'un agitateur 9 ; le récipient de passage 5 est relié, dans le sens de l'écoulement, à un concentrateur 12 ; il y a un conduit d'évacuation des boues 13 menant d'un orifice de pied du concentrateur 12 vers une installation de filtration ; un conduit 14 part de la région supérieure du concentrateur 12 et mène au récipient de neutralisation de l'installation de neutralisation ; et l'installation de neutralisation est reliée, dans le sens de l'écoulement, à une installation d'épuration biologique des eaux résiduaires.

8. Appareillage selon la revendication 7, caractérisé en ce que, entre le parcours de mélange 2 et le concentrateur 12, il y a, dans le sens de l'écoulement, au moins deux récipients de passage (5, 7).

9. Appareillage selon la revendication 7 ou 8, caractérisé en ce que chaque récipient de passage (5, 7) est équipé d'un conduit d'évent 8.